# EUROPEAN PATENT SPECIFICATION

(11) **EP 0 485 452 B1**
(45) Date of publication and mention of the grant of the patent: **06.12.1995**
(21) Application number: 90911819.2
(22) Date of filing: 01.08.1990
(51) Int. Cl.: A61K 31/74, A61K 31/78, A61K 9/14, A61K 31/70, A61K 31/715, A23L 1/025, A23L 1/05, A23L 1/053, A01K 97/04, A01N 25/00, A01N 25/04

(54) **INSECTICIDE DELIVERY SYSTEM AND ATTRACTANT**
INSEKTIZID-VERABREICHUNGSSYSTEM UND LOCKMITTEL
SYSTEME DE LIBERATION D'INSECTICIDE ET AGENT ATTIRANT LES INSECTES

(30) Priority: 03.08.1989 US 389598
(43) Date of publication of application: 20.05.1992
(73) Proprietor: TEMPLE UNIVERSITY, Philadelphia, PA 19122 (US)
(72) Inventor: CHANG, Frank, N., Dresher, PA 19025 (US); GEHRET, Michael, J., Lebanon, PA 17042 (US)
(74) Representative: Sandmair, Kurt, Dr. Dr.
(86) International application number: PCT/US90/04295
(87) International publication number: WO 91/01736

(56) References cited:
- EP-A- 0 060 467
- WO-A-85/04074
- DE-A- 3 023 764
- US-A- 3 070 495
- US-A- 3 337 395
- US-A- 3 858 346
- US-A- 4 178 366
- US-A- 4 304 906
- US-A- 4 311 795
- US-A- 4 326 052
- US-A- 4 363 798
- US-A- 4 369 176
- US-A- 4 377 636
- US-A- 4 434 231
- US-A- 4 450 233
- US-A- 4 695 455
- US-A- 4 701 326
- US-A- 4 743 247
- US-A- 4 753 799
- CHEMICAL ABSTRACTS, Volume 88, issued 1978, MATSUYAMA et al., "Elimination of insects from lumbels by gamma ray irradiation", see entire article Abstract No. 88:33950e.
- CHEMICAL ABSTRACTS, Volume 99, issued 1983, SCHAUDY et al., "Preservation experiments with radiation-curable impregnating agents on intact and artificially decayed wood samples" see entire article Abstract No. 99:39999b.
- CHEMICAL ABSTRACTS, Volume 99, issued 1983, SCHAUDY et al., "Couservation experiments applying radiation curable impregnating agents to intact and artificially decayed wood samples" see Abstract No. 99:177677w.
- Environmental Entomology, Vol. 17, No. 1, issued February 1988, DUNKLE et al., "Starch-Encapsulated Bacillus thuringien A Potential New Method for Increasing Environmental Stability of Entomopathogens", pages 120-126, see pages 120, 122, 124.

## Description

### BACKGROUND OF THE INVENTION

### (1)FIELD OF THE INVENTION

This invention relates generally to insecticidal delivery systems, in particular to systems for the delivery of natural entomopathogens to insect-infested loci.

### (2) DESCRIPTION OF RELATED ART

Use of natural biological predators to control populations of harmful insects has attracted increasing interest as the shortcomings of chemical pesticides have become more obvious. Despite the uncontroverted success of DDT in practically eliminating malaria as a worldwide scourge and the stunning increases in agricultural productivity associated with the judicious application of pesticides, attention has been increasingly focused on the negative effects of chemical agents.

Living insecticidal agents, delivered under controlled conditions, have narrow host ranges and can control the spread of specific hosts, without affecting natural predators or beneficial organisms. Such agents, herein termed entomopathogens, include bacteria, such as *Bacillus thuringiensis*, baculoviruses, fungal pathogens, and insect nematodes. These biological insecticides are generally more costly and less persistent than their chemical counterparts. Many entomopathogens are susceptible to rapid environmental degradation caused by exposure to ultraviolet radiation, heat, desiccation, substrate pH, or microbial competition, severely limiting their practical use. Consequently, efforts have been directed to both reducing manufacturing costs and maintaining the conditions necessary for preserving the activity of bioinsecticides to increase their competitiveness versus chemical insecticides.

Encapsulation technology similar to that developed for chemical insecticides has been used to protect and preserve entomopathogens. For example, microencapsulation of nuclear polyhedrosis viruses with polyvinyl alcohol, ethylcellulose, and other polymers has been reported. The microencapsulation of insecticidal crystal spore complexes of *Bacillus thuringiensis* has also been reported in the form of granules of approximately 500 microns diameter. Polysaccharides such as starch and cellulose have also been crosslinked with borate, calcium or xanthide to produce matrices that can be processed into granules off desirable sizes, densities and porosities. Unfortunately, this encapsulation process is not suited for entomopathogens because the presence of hydrogen peroxide, borate and alkaline pH in the crosslinking process kills the living insecticide.

Insect nematodes (*Steinernematidae, Heterorhabditidae, Mermithidae*) have been shown to be highly effective bioinsecticides (Poinar, "Nematodes for Biological Control of Insects", CRC Press, Inc., Boca Ratan ,Fla., 1979). However, insect nematodes require moist conditions to survive and function. When nematodes are dried they lose activity rapidly; subsequent rehydration fails to restore the lost activity. One method of preserving nematodes in a moist environment is via the microencapsulation processes of U. S. 4,615,883, 4,701,326, and 4,753,799. This art microencapsulates the nematodes in calcium alginate. The alginate microcapsules, however, have several drawbacks. They are fairly large and rigid and consequently are not appealing to insects as well as being out of the chewing range of smaller insects. Additionally, the ability of the alginate microcapsules to maintain moisture conditions conducive to survival of the nematodes has also been questioned (Dunkle and Shasha, Environ. Entomol., Vol. 17,120-126, 1988). To reduce the rate of desiccation, others have used water thickeners, mineral oil, or surfactants. See, for example, U.S. 4,178,366. With insect nematodes most of these approaches are ineffective in preserving the moisture content and consequently the biological activity. Some have adverse effects on biological activity or repel the target insects, thereby making them ineffective for their intended purpose.

A method for embedding microorganisms within in polymer matrix has been suggested by Yung (US-A-4,434,231). The polymer matrix includes polysaccharides (e.g. alginate, carrageenan and agar) and gums (e.g. karaya, tragacanth or arabic). To retard evaporation of the polymer gel, a porous substance of high water absorption capacity such as natural or synthetic silica, silico-aluminate or cellulose were added. Although this method is suitable for encapsulating microorganisms, it cannot be applied to insect nematodes due to rapid desiccation.

There exists a need therefore for a low cost, reliable method of protecting entomopathogens from desiccation without interfering with their ability to infect and destroy undesirable insects.

### SUMMARY OF THE INVENTION

This invention provides a novel composition and method for maintaining the viability of entomopathogens while providing a convenient means of delivering the entomopathogens to sites of insect infestation. These goals are accomplished by the provision of an insecticidal composition in the form of a hydrated macrogel. The macrogel contains at least one species of entomopathogen and a hydrated, water retentive polymer which serves as a reservoir of moisture for the entomopathogen. The macrogel itself is a continuous insect-consumable matrix, preferably made from a polysaccharide. The entomopathogen and the water reservoir are independently dispersed throughout the matrix. Also optionally dispersed in or on the matrix are attractants, food, feeding stimulants, complementary pesticides, and UV protectants.

A preferred attractant is irradiated, preferably gamma-irradiated, fungal-decayed wood which is optionally dispersed in or on the macrogel, in proximity thereto.

### DETAILED DESCRIPTION OF THE INVENTION

The problem of desiccation of entomopathogens such as insect nematodes, bacteria, baculoviruses, or fungal pathogens can be substantially ameliorated by the hydromacroencapsulation of this invention. As used herein the term "hydromacroencapsulation" refers to distributing entomopathogens, particularly nematodes, in a continuous insect-consumable matrix, along with a source of water for the entomopathogens. The final product is thus a continuous gel in which the nematodes or the like are embedded, together with a source of moisture, and, optionally, other additives, such as insect attractants, insect feeding stimulants, and such stabilizers as may be required by the contemplated use of the insecticidal macrogel.

By the process of this invention, the entomopathogens are suspended in an aqueous solution of a gel-forming matrix in the presence of an inert water retaining polymer. Gelation is then induced by whatever means are appropriate for the selected matrix. The resultant insecticidal macrogel then contains a distribution of entomopathogens and water reservoirs. The macrogel may be stored for an indefinite period without adverse effects on the viability of the entomopathogens and may be cut into smaller pieces as desired.

In one embodiment of this invention a solution of nematodes, water retentive polymer, and gel precursor is sprayed on the site where control is desired. Gelation is then induced by spraying with a solution of cations, forming a thin film of insecticidal macrogel directly on the designated locus.

The gel-forming matrix is selected from natural, naturally derived, and synthetic polymers, with the provisos that the matrix per se and the gelation conditions are neither harmful to the entomopathogens nor interfere with the effectiveness of the pathogens. Suitable gel-forming matrices include, but are not limited to, agarose, carbopols, carrageenan, dextran, guar gum, and other heteropolysaccharides, such as gellan gum. One advantage associated with the use of the natural polysaccharides is that these are often attractive as food for the insects whose demise is desired.

A preferred matrix is the cationically gellable heteropolysaccharides, such as those disclosed in U.S. 4,326,052 and U.S. 4,326,053, the disclosures of which are incorporated by reference herein. A suitable variety of this material is available commercially as Gel-Gro (R) gellan gum from ICN Biochemicals, Cleveland, Ohio.

An important aspect of the hydromacroencapsulation process of this invention is the selection of a gel-forming material which is a liquid at room temperature or at temperatures which are not detrimental to the entomopathogens and which can be induced to gel at a predetermined time by either mixing or spraying with a gelling agent. Such controlled gelation is important during manufacturing of the gels to avoid premature gelation and clogging of equipment. During the production of macrogels in discrete containers, a gelling time off 2 to 15 minutes is preferred. For spraying applications, instantaneous gelation is preferred to avoid run-off or dripping.

The gelation time of the Gel-Gro (R) gellan gum used in the Examples which follow is easily controlled by varying the polymer concentration, the concentration and type of gelling agent, and the temperature. Preferably, the Gel-Gro liquid polymer concentration is between 0.4% and 5.0% by weight, the gelling agent is a cation, and the concentration of gelling agent is from 0.1 mM to 500 mM. Most preferably, the polymer concentration is from about 0.6% to 1.2% by weight, the gelling agent is a divalent cation, and the cation concentration is from about 0.5 mM to 25.0 mM. The most preferable conditions result in gelation times of about 1 to 15 minutes. When spraying formulations are desired, a cation concentration in excess of 25 mM is preferred to obtain rapid gelation.

Suitable divalent cations include barium, calcium, copper(II), iron(II), magnesium, manganese, and zinc(II). Monovalent cations such as ammonium, cesium, lithium, potassium, and sodium, may also be used to induce gelation, albeit at higher concentrations. Trivalent ions such as aluminum and iron(III) are also useful.

The hydrated, water retentive compound which is incorporated into the gel as the water reservoir for the entomopathogen is typically a water-absorbing polymer, such as a hydrophilic acrylic, acrylamide, vinyl, or polyurethane polymer. Such polymers, commonly known as hydrogels, will absorb and retain several hundred times their weight in water and will slowly release the absorbed water. Representative examples of these materials are California Crystals (R), a water-absorbing acrylic polymer available from J & G Agrow-tek, Rancho Cordova, Cal. and Water Grabber(R), a water-absorbing acrylamide from FP Products, Inc., Atlanta, Ga. Other materials which exhibit similar affinities for water may be substituted. The amount of hydrated, water retentive polymer present in the matrix is generally about 25% to about 75%, although the choice and concentration of pathogen and the envisioned environment may lead to significant departures from these norms.

The matrix is obtained by mixing the polysaccharide solution with the nematode-polymer disperion in a ratio from about 4:1 to about 1:4 polysaccharide solution to nematode-polymer dispersion to form a nematode-polymer-polysaccharide-dispersion and gelling this dispersion.

As previously noted, the entomopathogen is selected from among those pathogens which control noxious insect infestations. Baculoviruses, such as nuclear polyhedrosis virus, bacteria, such as *Bacillus thuringiensis,* fungal pathogens, such as *Beauveria bassiana, Metarrhizium anisopliae,* and *Nomurea releyi,* and nematodes, such as *Neoaplectana carpocapsae* and *Heterorhabditis heliothidis* are among the more useful pathogens. Selection of the entomopathogens is not limited to those described herein, but is well within the purview of one skilled in the art of natural predation. Nematodes are particularly well-suited for the practice of this invention. However, the only limitations on the pathogens are that they not be inactivated by the conditions of gelation or the composition of the macrogel. Since the entomopathogens will reproduce in the insect host, only a few need be incorporated in a discrete sample of gel to provide control. Of course, millions of pathogens may be easily incorporated. In the practice of this invention, we have found that nematode concentrations of up to about 500,000 per milliliter are most useful. For other pathogens, such as bacteria, the gel may contain as much as 20% by weight.

A further aspect of the current invention is the optional use of agents capable of attracting insects to the gels and stimulating the insects to feed on the gels. Such agents, also termed baits, can include, for example, foods used in the commmercial rearing of insects, pheromones, chemical attractants, and the like. The compound for stimulating ingestion may be a saccharide, which may be selected from the group consisting of glucose, sucrose, mannose and raffinose. Art-recognized insect attractants include sucrose, wheat germ, and bran. In the course of this development, it has been discovered that raffinose is a highly effective feeding stimulant for certain insects.

In one aspect this invention makes use of a new attractant. U.S. 3,070,495, incorporated by reference herein, disclosed the peculiar efficacy of fungal-decayed wood as attractant. This patent reported that an attracting principle could be obtained by the fungal-induced decay of coniferous and deciduous woods. Brown rot, white rot, and soft rot were all effective in generating the attractant. Extracts of the decayed wood were also attractive. The use of the fungal-decayed wood, however, presents an environmental problem in that live wood-decaying fungi are released. Although the fungi may be killed by autoclaving the fungal-decayed wood, the high temperatures involved also inactivate the attracting principle. This problem has been resolved by our discovery that gamma irradiation of the fungal-decayed wood kills the fungi.

The decayed wood was exposed to irradiation at a dose sufficient to kill the fungi without adversely affecting the attractive ability of the wood or extract thereof.

The insecticidal macrogel may be in the form of a cylinder, a cone, a sphere, a cube or a rectilinear solid.

The insecticidal macrogel of this invention may include other additives, such as UV protectants. In one embodiment of this invention, a protectant and/or attractant composition is coated or merely distributed on the exposed surface of the macrogel, thereby providing the desired functionality without the need to incorporate the additive into the macrogel itself. This is particularly attractive for additives which may be toxic to the embedded entomopathogen. Optionally, the macrogel may be supplied in colored containers, thus reducing the susceptibility to degradation by sunlight.

It is intended that the macrogel be used in the form which is most efficacious for the insect control situation involved. To this end, macrogel may be formed in discrete containers for transfer directly to the situs of control, may be prepared in large blocks which can be shaved or trimmed to provide the desired dosage, and even may be formed right at the site of infestation. The macrogel may also be formed with a funnel, tube, spike, or the like.

Among the many advantages of this invention are:
1. More than one entomopathogen may be included in the macrogel thereby providing a diverse insecticidal spectrum.
2. Attractants, feeding stimulants, stabilizers, protectants, and chemical insecticides may be employed in the matrix, as surface agents, or both, depending upon their compatibility with the gel and the entomopathogen, and the needs of the situation.
3. The macrogels are simple to manufacture and highly efficient in incorporation of all ingredients.
4. The soft, hydrated macrogels are easily consumed by all kinds of insects ranging from small ants to giant caterpillars.

The following examples are presented to illustrate the basic features of the invention but are not intended to, and should not be construed as, placing any undue limitations on the invention as claimed.

### EXAMPLE 1

A solution of purified gellan gum (Gel-Gro (R) gellan gum) was prepared by dissolving 0.2g of the gum in 10 mL of hot deionized, distilled water to make a 2% solution. This solution was cooled to room temperature.

A stock of fully swelled and expanded water retentive polymer was prepared by soaking small crystals of a water-swellable acrylic polymer (California Crystals) (R) in water for about one day. The swollen crystal gels were then pushed through a wire screen to produce pieces that were approximately 1 mm in length, width, and height. Enough water swollen pieces were added to a 1 mL aqueous dispersion containing approximately 10,000 nematodes (*Neoaplectana carpocapsae*) to increase the volume to 2 mL.

To this nematode dispersion, 2 mL of the 2 wt% gellan gum solution was added with gentle mixing. 0.2 mL of 20 mM calcium chloride was then added and the resultant mixture quickly poured into plastic tubes. Gelation was complete in about ten minutes and the tubes were then capped.

When capped, the insecticidal nematode macrogels are stable for at least one year when stored at 16° C or lower. At room temperature, the macrogels retain biological activity for at least six months.

When nematode-containing macrogels without water retentive polymers were uncapped and exposed at room temperature, the macrogels dehydrated rapidly, and after one week, the gels were totally dry and few live nematodes were present. In contrast, uncapped nematode-containing macrogels with water retentive polymer were still moist after one week at room temperature and at least 95% of the nematodes were still alive.

### EXAMPLE 2

A 2% gellan gum solution was prepared as in Example 1. To this solution was added with vortexing an equal volume of the nematode-water retentive polymer dispersion of Example 1, also containing 2 mM calcium chloride. The resulting macrogel was then capped and stored below 16° C.

### EXAMPLE 3

A nematode-containing macrogel was prepared following the procedure of Example 2 in plastic test tube caps (1 cm diameter, 1.8 cm height). Raffinose (2% by weight) was also present in the nematode-water retentive polymer dispersion. Two of these macrogel samples were placed in a large tray (40 x 20 cm, 15 cm high), layered with wood shavings and having both water and gourmet insect diet present. Ten German cockroaches (*Blatella germanica*) were introduced into the tray. After 3 days, all the cockroaches were dead. When dissected 4 days later, each contained 10 or more live nematodes within the body. Nematode-free macrogel placed in a control tray had no effect on cockroaches.

### EXAMPLE 4

Nematode-containing macrogels prepared as in Example 3 were tested for efficacy against a representative cross-section of insect pests. The tests were conducted in 250 mL beakers containing both insect food and a source of water. The results are summarized below.

| INSECT | TIME TO KILL | NEMATODES IN BODY CAVITY 10 DAYS LATER |
|---|---|---|
| Southern armyworm (*Spodoptera eridania*) | <2 days | 1000 |
| Mexican Bean Beetle (*Epilachna varivestis*) | <2 days | 500 |
| Black cutworm (*Agrotis ipsilon*) | 1-2 days | 1000 |
| Boll weevil (*Anthonomus grandis)* | <2 days | Not Counted |
| Tobacco budworm (*Heliothis virescens*) | <3 days | Not Counted |
| Corn rootworm (*Diabrotica* spp.) | 1-2 days | 250 |
| Tobacco hornworm (*Manduca sexta*) | 1-2 days | 10,000 |

### EXAMPLE 5

A 2.0% agarose solution was prepared by dissolving 0.2 g of agarose in 10 ml of distilled water in a boiling water bath for approximately 5 minutes. The solution was cooled to 60°C and maintained at this temperature in a constant temperature water bath to prevent premature gelation. A stock of fully swelled and expended water retentive polymer was prepared by soaking small crystals of water-swellable acrylic polymer in water for 1 day. The swollen crystal gels were then pushed through a wire screen to produce pieces that were approximately 1 mm in length, width, and height. Enough water swollen pieces were added to 1 ml aqueous dispersion containing approximately 10,000 nematodes (*Neoaplectana caprocapsae*) to increase the volume to 2 ml.

Two ml of agarose solution in a test tube previously maintained at 60°C were taken out of the water bath and cooled to about 45°C. To this agarose solution, 2 ml of the above nematode-water retentive polymer dispersion were added with vortexing and the resulting mixture was poured immediately into a mold. Gelation occurred in about 5 to 10 seconds. The nematode macrogels in agarose were then covered with parafilm. The insect nematode agarose macrogels were stable for at least one year when stored below 16°C. Similar insect nematode macrogels have been prepared using carrageenan, agar, kappa-carrageenan, carbopol and guar gum, all with retention of activity.

### EXAMPLE 6

A 2% gellan gum solution was prepared as described in Example 1. Enough water swollen pieces of water retentive polymers were added to a 1 ml aqueous suspension containing 4 mM calcium chloride and nuclear polyhedrosis viruses (NPV) isolated from diseased wax moth larvae to make a 2 ml solution (final concentration of calcium chloride was 2 mM). This NPV-water retentive polymer solution was then added with gentle vortexing to an equal volume of the 2% gellan gum solution at room temperature and quickly poured into plastic tubes. Gelation took approximately 10 minutes and the NPV macrogel tubes were then capped and stored at below 16°C. The NPV macrogels were stable for at least six months.

### EXAMPLE 7

A 2% gellan gum solution was prepared as described in Example 1. Enough water swollen pieces of water retentive polymers were added to a 1 ml solution of crystal-spore complexes (2.5 mg/ml) from *Bacillus thuringiensis* subsp. *kurstaki* (Bt) containing 4 mM calcium chloride to make a 2 ml solution. To this solution was added, with gentle vortexing, 2 ml of the 2% gellan gum solution at room temperature and the resultant mixture was poured into plastic tubes. Macrogel tubes were then capped and stored below 16°C. The Bt crystal-spore macrogels were stable for at least six months.

Macrogels containing both Bt crystal-spore complexes and approximately 10,000 nematodes (*Neoaplectana carpocapsae*) were also prepared as described above by mixing these two entomopathogens together with gellan gum. Various macrogels were then cut into small cubes of 0.5 cm in length, width and height and placed on top of a diet for tobacco hornworms (*Manduca sexta*) in plastic containers measuring 3 cm in diameter and 10 cm in height. The combined insect nematode-Bt crystal macrogels were found to be more active against tobacco hornworms than either nematode macrogels or Bt crystal macrogels alone. Control macrogels without entomopathogens were inactive against tobacco hornworms.

### EXAMPLE 8

A 2% gellan gum solution was prepared as described in Example 1. Enough water swollen pieces of water retentive polymers were added to a 1 ml aqueous suspension of fungal pathogen (*Beauveria bassiana*) spores containing small amounts of Tween-20 and 4 mM calcium chloride to make a 2 ml solution. The fungal pathogen-water retentive polymer dispersion was then added, with gentle vortexing, to 2 ml of gellan gum solution. The resultant mixture was poured into plastic tubes, capped, and stored below 16°C. These macrogels were stable for at least several months. Similar macrogels were also prepared from fungal pathogens *Metarrhizium anisopliae* and *Nomurea releyi*, all with retention of activity.

### EXAMPLE 9

A 2% gellan gum and a 0.2 M calcium chloride solutions in deionized distilled water were prepared. To the 2% gellan gum solution was added with gentle vortexing an equal volume of the nematode-water retentive polymer dispersion as described in Example 2 except in the absence of calcium chloride. The resulting solution was sprayed on the surface of tobacco leaves. Calcium chloride solution (0.2 M) was then sprayed on top of the gellan gum-nematode-water retentive polymer to induce instant gelation. After about 2 hours, the leaves were fed to tobacco hornworms (*Manduca sexta*) and insects were dead 48 hours later. No mortality was found when control gels without nematodes were used. This example illustrates the usefulness of gelation by spraying with high concentration of a gelling agent (calcium chloride).

### EXAMPLE 10

A 2% gellan gum solution was prepared as described in Example 1. Enough water swollen pieces of water retentive polymers were added to a 1 ml solution of crystal-spore complexes (2.5 mg/ml) from *Bacillus thuringiensis* subsp. *kurstaki* (Bt) containing 4 mM calcium chloride and 10% UV protectant Octyl-dimethyl PABA to make a 2 ml solution. To this solution was added, with vortexing, 2 ml of the 2% gellan gum solution. The resultant mixture was poured into plastic tubes, capped and stored below 16°C. The Bt crystal macrogels containing UV protectant were stable for at least six months. The hydrophobic nature of the UV protectant allows them to concentrate on top of the macrogels which offer advantage for protection against inactivation by sunlight. When the UV protectant-containing Bt macrogels were challenged with UV by irradiation with a GE germicidal lamp at a distance of 10 cm for 1 hour, full retention of biological activity against tobacco hornworms (*Manduca sexta*) was observed. Dimunition of activity was observed for unprotected macrogels.

## Claims

1. An insecticidal macrogel comprising an insect-consumable continuous matrix containing at least one species of entomopathogen and pieces of a hydrated water retentive polymer which provides a reservoir of water for preventing dehydration of the entomopathogen, said polymer pieces and said entomopathogen being dispersed throughout said matrix.

2. A macrogel of claim 1 in which the insect-consumable matrix is selected from natural, naturally derived, and synthetic polymers.

3. A macrogel of claim 1 in which the insect-consumable matrix is selected from the group consisting of agarose, dextran, carrageenan, gellan gum, and guar gum.

4. A macrogel of claim 1 in which the insect-consumable matrix is a polymerized carbopol.

5. A macrogel of claim 1 in which the insect-consumable matrix is a kappa-carrageenan.

6. A macrogel of claim 1 in which the insect-consumable matrix is a heteropolysaccharide.

7. A macrogel of claim 6 in which the gelation of heteropolysaccharide is a result of an addition of cations to an anionic gellan gum.

8. A macrogel of claim 7 in which said gum is gelled with divalent cations selected from the group consisting of barium, calcium, copper(II), iron(II), magnesium, manganese(II), and zinc(II) ions.

9. A macrogel of claim 7 in which said gum is gelled with monovalent cations selected from the group consisting of ammonium, cesium, lithium, potassium, and sodium ions.

10. A macrogel of claim 7 in which said gum is gelled with trivalent cations selected from the group consisting of Al(III) and Fe(III).

11. A macrogel of claim 1 in which the water retentive polymer is a hydrophilic acrylic, acrylamide, vinyl, or polyurethane polymer.

12. A macrogel of claim 1 in which the entomopathogens are selected from nematodes, bacteria, baculoviruses, and fungal pathogens.

13. A macrogel of claim 12 in which at least one entomopathogen is an insect nematode selected from the group consisting of *Neoaplectana carpocapsae* and *Heterorhabditis heliothidis*.

14. A macrogel of claim 12 in which the entomopathogen is nuclear polyhedrosis virus.

15. A macrogel of claim 12 in which the entomopathogen is a *Bacillus thuringiensis* or the crystal-spore complexes thereof.

16. A macrogel of claim 12 in which the entomopathogen is selected from the group consisting of *Beauveria bassiana, Metarrhizium anisopliae*, and *Nomurea releyi*.

17. A macrogel of claim 1 further comprising at least one agent capable of attracting insects to the macrogel, said agent included in, coated on, or in effective proximity to, said macrogel.

18. A macrogel of claim 17 in which said attractant agent is fungal-decayed wood or an attractive extract thereof.

19. A macrogel of claim 18 in which the fungal-decayed wood has been exposed to irradiation effective to kill the fungi without adversely affecting the attractive ability of the wood or extract thereof.

20. A macrogel of claim 19 in which the fungal-decayed wood or extract thereof has been treated with gamma rays at a dose sufficient to kill the fungi without adversely affecting the attractive ability of the wood or extract thereof.

21. A macrogel of claim 1 further comprising at least one agent for stimulating ingestion of the macrogel by the target insect.

22. A macrogel of claim 21 in which said agent is a saccharide selected from the group consisting of glucose, sucrose, mannose, and raffinose.

23. An insecticidal macrogel comprising at least one species or insecticidal nematode, pieces of a hydrated water retentive polymer to provide sufficient water to maintain the viability and infectivity of said nematodes and to maintain the softness and ease of consumption of the macrogel, a quantity of at least one compound for attracting insects to and stimulating ingestion of the macrogel by the insects, dispersed throughout an insect-consumable, continuous, matrix of gelled polysaccharide.

24. A macrogel of claim 23 in which the compound for stimulating ingestion is a saccharide.

25. A macrogel of claim 23 in which the compound for stimulating ingestion is raffinose.

26. A macrogel of claim 1 or 23 further comprising at least one additional insecticides, biocide, fungicide, algicide, or the like.

27. A macrogel of claim 1 or 23 further comprising a compound for imparting stability to ultraviolet radiation, said compound contained in, or on the surface of, said macrogel.

28. A macrogel of claim 1 or 23 in the form of a cylinder, a cone, a sphere, a cube, or a rectilinear solid.

29. A macrogel of claim 1 or 23 within a funnel, tube, spike, or the like.

30. A method for producing an insect-consumable, continuous macrogel matrix comprising:
a) preparing an aqueous solution off gellable polysaccharide;
b) mixing pieces of a hydrated water retentive polymer with an aqueous dispersion of nematodes;
c) dispersing the aqueous mixture of pieces of water retentive polymer and nematodes throughout said aqueous solution of gellable polysaccharide; and
d) gelling the product of step c).

31. A method for producing an insect-consumable, continuous macrogel matrix comprising:
a) preparing a 0.4% to 5.0% solution of a cationically gellable polysaccharide in deionized water;
b) preparing an aqueous dispersion of nematodes having a few to about 500,000 nematodes per milliliter;
c) adding pieces of a hydrated water retentive polymer to the nematodes dispersion;
d) mixing the polysaccharide solution with the nematode-polymer piece dispersion in a ratio of from about 4:1 to about 1:4 polysaccharide solution to nematode-polymer dispersion to form a nematode-polymer-polysaccharide dispersion; and
e) gelling the nematode-polymer piece polysaccharide dispersion with cations.

32. A method for producing an insect-consumable, continuous magrogel matrix comprising:
a) preparing a 0.4% to 5.0% solution of a gellable polysaccharide in deionized water;
b) preparing an aqueous dispersion of nematodes having a few to about 500,000 nematodes per milliliter;
c) adding pieces of a water-swollen hydrophilic polymer to the nematode dispersion;
d) adding gel-inducing cations to the nematode-water retentive polymer dispersion; and
e) dispersing the products of steps a) and d) with one another in a ratio of about 1:4 to 4:1.

33. A method for controlling infestations of insects comprising applying to the locus where control is desired an insecticidal composition, said composition consisting essentially of an effective amount of at least one species of entomopathogen and pieces of a water swollen hydrophilic polymer being dispersed throughout an insect consumable continuous polymeric matrix.

34. A method of claim 33 further comprising locating sealed containers of the macrogel composition in the locus where control is desired and opening said containers when control is desired, optionally with the on-site provision of attractants, feeding stimulants, or both, to attract the insects to the insecticidal macrogel.

35. A method of claim 33 further comprising the use of a complementary insecticide in conjunction with the insecticidal macrogel.

36. A composition of claim 1 or 23 having from about 25% to about 75% by weight hydrated water retentive compound and from a few to up to about 20% by weight entomopathogens, the remainder being matrix material and additives.

37. A macrogel of claim 26 in the form of a cylinder, a cone, a sphere, a cube, or a rectilinear solid.

38. A macrogel of claim 26 within a funnel, tube, spike, or the like.

39. A macrogel of claim 1 wherein said water retentive polymer is selected from the group consisting of a hydrophilic acrylic, acrylamide and polyurethane polymer.

40. A macrogel of claims 1 or 23 wherein said species of entomopathogen are nematodes and *Bacillus thuringiensis*.

## Patentansprüche

1. Insektizides Makrogel, umfassend eine von Insekten verzehrbare kontinuierliche Matrix, die mindestens eine Entomoerregerspezies und Stücke eines hydratisierten, wasserrückhaltenden Polymeren enthält, das ein Wasserreservoir zur Verhinderung der Austrocknung des Entomoerregers zur Verfügung stellt, wobei die Polymerstücke und das Entomoerreger in der Matrix dispergiert sind.

2. Makrogel nach Anspruch 1, in dem die von Insekten verzehrbare Matrix aus natürlichen, von natürlichen abgeleiteten und synthetischen Polymeren ausgewählt ist.

3. Makrogel nach Anspruch 1, in dem die von Insekten verzehrbare Matrix aus der aus Agarose, Dextran, Carrageenan, Gellankautschuk und Guar Gum bestehenden Gruppe ausgewählt ist.

4. Makrogel nach Anspruch 1, in dem die von Insekten verzehrbare Matrix ein polymerisiertes Carbopol ist.

5. Makrogel nach Anspruch 1, in dem die von Insekten verzehrbare Matrix ein kappa-Carrageenan ist.

6. Makrogel nach Anspruch 1, in dem die von Insekten verzehrbare Matrix ein Heteropolysaccharid ist.

7. Makrogel nach Anspruch 6, in dem das Gelieren des Heteropolysaccharids das Ergebnis der Zugabe von Kationen zu einem anionischen Gellankautschuk ist.

8. Makrogel nach Anspruch 7, in dem das Gelieren des Kautschuks mit zweiwertigen, aus der aus Barium-, Calcium-, Kupfer(II)-, Eisen(II)-, Magnesium-, Mangan(II)- und Zink(II)-ionen bestehenden Gruppe ausgewählten Kationen erfolgt.

9. Makrogel nach Anspruch 7, in dem das Gelieren des Kautschuks mit einwertigen, aus der aus Ammonium-, Caesium-, Lithium-, Kalium- und Natriumionen bestehenden Gruppe ausgewählten Kationen erfolgt.

10. Makrogel nach Anspruch 7, in dem das Gelieren des Kautschuks mit dreiwertigen, aus der aus Al(III) und Fe(III) bestehenden Gruppe ausgewählten Kationen erfolgt.

11. Makrogel nach Anspruch 1, in dem das wasserrückhaltende Polymer ein hydrophiles Acryl-, Acrylamid-, Vinyl- oder Polyurethanpolymer ist.

12. Makrogel nach Anspruch 1, in dem die Entomoerreger aus Nematoden, Bakterien, Baculoviren und Pilzerregern ausgewählt sind.

13. Makrogel nach Anspruch 12, in dem mindestens ein Entomoerreger ein aus der aus *Neoaplectana carpocapsae* und *Heterorhabditis heliothidis* bestehenden Gruppe ausgewählter Insektennematode ist.

14. Makrogel nach Anspruch 12, in dem der Entomoerreger ein Zellkernpolyhedrosevirus ist.

15. Makrogel nach Anspruch 12, in dem der Entomoerreger ein *Bacillus thuringiensis* oder ein Kristallsporenkomplex davon ist.

16. Makrogel nach Anspruch 12, in dem der Entomoerreger aus der aus *Beauveria bassiana*, *Meterrhizium anisopliae* und *Nomurea releyi* bestehenden Gruppe ausgewählt ist.

17. Makrogel nach Anspruch 1, das außerdem mindestens einen Wirkstoff enthält, der Insekten auf das Makrogel anziehen kann und in dieses Makrogel eingebracht wird, darauf geschichtet ist oder sich in unmittelbarer Nähe davon befindet.

18. Makrogel nach Anspruch 17, in dem dieser anziehende Wirkstoff von Pilzen zersetztes Holz oder ein anziehender Extrakt daraus ist.

19. Makrogel nach Anspruch 18, in dem das von Pilzen zersetzte Holz bestrahlt wurde, um die Pilze zu zerstören, ohne die anziehende Fähigkeit des Holzes oder des Extraktes daraus zu beeinträchtigen.

20. Makrogel nach Anspruch 19, in dem das von Pilzen zersetzte Holz oder der Extrakt daraus mit in einer ausreichenden Dosis γ-Strahlen behandelt wurde, um die Pilze zu zerstören, ohne die anziehende Fähigkeit des Holzes oder des Extraktes daraus zu beeinträchtigen.

21. Makrogel nach Anspruch 1, das außerdem mindestens einen Wirkstoff enthält, der die Aufnahme des Makrogels durch das Zielinsekt stimuliert.

22. Makrogel nach Anspruch 21, in dem dieser Wirkstoff ein aus der aus Glukose, Saccharose, Mannose und Raffinose ausgewähltes Saccharid ist.

23. Insektizides Makrogel, umfassend mindestens eine insektizide Nematodenspezies, Stücke eines hydratisierten, wasserrückhaltenden Polymeren, um ausreichend Wasser für die Erhaltung der Lebensfähigkeit und Infektiosität der Nematoden zur Verfügung zu stellen und die Weichheit und einfache Verzehrbarkeit des Makrogels aufrechtzuerhalten, eine Menge mindestens einer Verbindung zur Anziehung von Insekten und zur Stimulierung der Aufnahme des Makrogels durch diese, welche in einer von Insekten verzehrbaren, kontinuierlichen Matrix aus geliertem Polysaccharid dispergiert sind.

24. Makrogrel nach Anspruch 23, in dem die Verbindung zur Stimulierung der Aufnahme ein Saccharid ist.

25. Makrogel nach Anspruch 23, in dem die Verbindung zur Stimulierung der Aufnahme Raffinose ist.

26. Makrogel nach Anspruch 1 oder 23, das außerdem mindestens ein zusätzliches Insektizid, Biozid, Fungizid, Algizid o.ä. umfaßt.

27. Makrogel nach Anspruch 1 oder 23, das außerdem eine Verbindung enthält, die Stabilität bei UV-Bestrahlung verleiht und in oder auf der Oberfläche des Makrogels enthalten ist.

28. Makrogel nach Anspruch 1 oder 23 in Form eines Zylinders, Kegels, einer Kugel, eines Würfels oder rechteckigen Feststoffs.

29. Makrogel nach Anspruch 1, das sich in einem Trichter, Röhrchen, Dorn o.ä. befindet.

30. Verfahren zur Herstellung einer von Insekten verzehrbaren kontinuierlichen Makrogelmatrix, bei dem man
a) eine wäßrige Lösung eines gelierbaren Polysaccharids herstellt;
b) Stücke eines hydratisierten, wasserrückhaltenden Polymeren mit einer wäßrigen Nematodendispersion mischt;
c) die wäßrige Mischung aus Stücken von wasserrückhaltendem Polymeren und Nematoden in der wäßrigen Lösung aus gelierbarem Polysaccharid dispergiert und
d) das Produkt aus Schritt c) geliert.

31. Verfahren zur Herstellung einer von Insekten verzehrbaren, kontinuierlichen Makrogelmatrix, bei dem man:
a) eine 0,4 bis 5,0%ige Lösung eines kationisch gelierbaren Polysaccharids in entionisiertem Wasser herstellt,
b) eine wäßrige Nematodendispersion mit einigen wenigen bis etwa 500.000 Nematoden pro Milliliter herstellt;
c) Stücke von einem hydratisierten wasserrückhaltenden Polymeren zu der Nematodendispersion gibt;
d) die Polysaccharidlösung mit der Dispersion aus Nematoden und Polymerstücken in einem Verhältnis von etwa 4 : 1 bis etwa 1 : 4 Polysaccharidlösung zu Nematoden-Polymerlösung vermischt, um eine Dispersion aus Nematoden, Polymer und Polysaccharid herzustellen, und
e) die Dispersion aus Nematoden, Polymerstücken und Polysaccharid mit Kationen geliert.

32. Verfahren zur Herstellung einer von Insekten verzehrbaren, kontinuierlichen Makrogelmatrix, bei dem man:
a) eine 0,4 bis 5,0%ige Lösung eines gelierbaren Polysaccharids in entionisiertem Wasser herstellt,
b) eine wäßrige Nematodendispersion mit einigen wenigen bis etwa 500.000 Nematoden pro Milliliter herstellt;
c) Stücke von einem durch Wasser aufgequollenen, hydrophilen Polymeren zu der Nematodendispersion gibt;
d) gelinduzierende Kationen zu der Dispersion aus Nematoden und wasserrückhaltendem Polymer gibt und
e) die Produkte aus Schritt a) und d) in einem Verhältnis von etwa 1 : 4 bis 4 : 1 miteinander dispergiert.

33. Verfahren zur Bekämpfung von Insektenbefall, bei denen man an dem Standort, wo eine Bekämpfung erforderlich ist, eine insektizide Zusammensetzung anbringt, welche im wesentlichen aus einer wirksamen Menge mindestens einer Entomoerregerspezies und Stücken eines durch Wasser aufgequollenen hydrophilen Polymeren besteht, die in einer von Insekten verzehrbaren, kontinuierlichen Polymermatrix dispergiert sind.

34. Verfahren nach Anspruch 33, das außerdem das Anbringen von versiegelten Behältern mit der Makrogelzusammensetzung an dem Standort, wo eine Bekämpfung erwünscht ist, und das Öffnen bei Bedarf umfaßt, wobei wahlweise vor Ort anziehende Wirkstoffe, Aufnahmestimulanzien oder beide zur Verfügung gestellt werden, um die Insekten zum insektiziden Makrogel zu locken.

35. Verfahren nach Anspruch 33, das außerdem den Einsatz eines zusätzlichen Insektizids zusätzlich zu dem insektentötenden Makrogel umfaßt.

36. Zusammensetzung nach Anspruch 1 oder 23, die etwa 25 bis etwa 75 Gew.-% einer hydratisierten, wasserrückhaltenden Verbindung und einige wenige bis etwa 20 Gew.-% Entomoerreger enthält, wobei der Rest aus Matrixmaterial und Additiven besteht.

37. Makrogel nach Anspruch 26 in Form eines Zylinders, Kegels, einer Kugel, eines Würfels oder eines rechteckigen Feststoffs.

38. Makrogel nach Anspruch 26, das sich in einem Trichter, einem Röhrchen, einem Dorn o.ä. befindet.

39. Makrogel nach Anspruch 1, in dem das wasserrückhaltende Polymer aus der aus einem hydrophilen Acryl-, Acrylamid- und Polyurethanpolymer bestehenden Gruppe ausgewählt ist.

40. Makrogel nach Anspruch 1 oder 23, in dem es sich bei der Entomoerregerspezies um Nematoden und *Bacillus thuringiensis* handelt.

## Revendications

1. Macrogel insecticide comprenant une matrice continue consommable par les insectes et contenant au moins une espèce d'entomopathogène et des morceaux de polymère hydraté hydrophile qui constitue un réservoir d'eau pour empêcher la déshydratation de l'entomopathogène, lesdits morceaux de polymère et ledit entomopathogène étant dispersés dans toute ladite matrice.

2. Macrogel de la revendication 1 dans lequel la matrice consommable par les insectes est choisie parmi des polymères naturels, dérivés de polymères naturels, ou synthétiques.

3. Macrogel de la revendication 1 dans lequel la matrice consommable par les insectes est choisie à partir du groupe consistant dans l'agarose, le dextrane, le carrageenan, une gomme gélifiante, et une gomme guar.

4. Macrogel de la revendication 1 dans lequel la matrice consommable par les insectes est un carbopol polymérisé.

5. Macrogel de la revendication 1 dans lequel la matrice consommable par les insectes est un kappa-carrageenan.

6. Macrogel de la revendication 1 dans lequel la matrice consommable par les insectes est un hétéropolysaccharide.

7. Macrogel de la revendication 6 dans lequel la gélification de l'hétéropolysaccharide est le résultat d'une addition de cations à une gomme gélifiante anionique.

8. Macrogel de la revendication 7 dans lequel ladite gomme est gélifiée avec des cations divalents sélectionnés à partir du groupe consistant dans l'ion baryum, l'ion calcium, l'ion cuivre(II), l'ion fer(II), l'ion magnésium, l'ion manganèse(II), et l'ion zinc(II).

9. Macrogel de la revendication 7 dans lequel ladite gomme est gélifiée avec des cations monovalents sélectionnés à partir du groupe consistant dans l'ion ammonium, l'ion césium, l'ion lithium, l'ion potassium, et l'ion sodium.

10. Macrogel de la revendication 7 dans lequel ladite gomme est gélifiée avec des cations trivalents sélectionnés à partir du groupe consistant dans Al(III) et Fe(III).

11. Macrogel de la revendication 1 dans lequel le polymère hydrophile est un polymère hydrophile acrylique, acrylamide, vinyle, ou polyuréthane.

12. Macrogel de la revendication 1 dans lequel les entomopathogènes sont sélectionnés à partir de pathogènes nématodes, de pathogènes bactériens, de pathogènes bacillovirus, et de pathogènes fongiques.

13. Macrogel de la revendication 12 dans lequel au moins l'un des entomopathogènes est une nématode d' insecte sélectionnée à partir du groupe consistant dans *Neoaplectana carpocapsae* et *Heterorhabditis heliothidis*.

14. Macrogel de la revendication 12 dans lequel l'entomopathogène est un virus nucléaire polyhédrosis.

15. Macrogel de la revendication 12 dans lequel l'entomopathogène est un *Bacillus thuringiensis* ou ses complexes cristal-spores.

16. Macrogel de la revendication 12 dans lequel l'entomopathogène est sélectionné à partir du groupe consistant dans *Beauveria bassiana*, *Metarrhizum anisopliae*, et *Nomurea releyi*.

17. Macrogel de la revendication 1 comprenant en outre un agent capable d'attirer les insectes sur le macrogel, ledit agent étant inclus dans, enrobé sur, ou à proximité immédiate dudit macrogel.

18. Macrogel de la revendication 17 dans lequel ledit agent attractif est un bois décomposé par les champignons ou l'un de ses extraits attractifs.

19. Macrogel de la revendication 18 dans lequel ledit bois décomposé par les champignons a été exposé à une radiation efficace pour tuer les champignons sans affecter de façon défavorable la capacité d'attraction du bois ou de ses extraits.

20. Macrogel de la revendication 19 dans lequel le bois décomposé par les champignons ou ses extraits a été traité avec des rayons gamma selon une dose suffisante pour tuer les champignons sans affecter de façon défavorable la capacité d'attraction du bois ou de ses extraits.

21. Macrogel de la revendication 1 comprenant en outre au moins un agent pour stimuler l'ingestion du macrogel par l'insecte cible.

22. Macrogel de la revendication 21 dans lequel ledit agent est un saccharide sélectionné à partir du groupe consistant dans le glucose, le sucrose, le mannose, et le raffinose.

23. Macrogel insecticide comprenant au moins une sorte de nématode insecticide, des morceaux d'un polymère hydraté hydrophile pour fournir suffisamment d'eau pour maintenir la viabilité et le caractère infectant desdites nématodes et pour maintenir la douceur et la facilité de consommation du macrogel, une quantité d'au moins un composé pour attirer des insectes et pour stimuler l'ingestion du macrogel par les insectes, dispersés dans toute une matrice continue consommable par les insectes de polysaccharide gélifié.

24. Macrogel de la revendication 23 dans lequel le composé pour stimuler l'ingestion est un saccharide.

25. Macrogel de la revendication 23 dans lequel le composé pour stimuler l'ingestion est du raffinose.

26. Macrogel de la revendication 1 ou de la revendication 23 comprenant en outre au moins un insecticide additionnel, biocide, fongicide, algicide, ou équivalent.

27. Macrogel de la revendication 1 ou de la revendication 23 comprenant en outre un composé pour donner une stabilité à la radiation ultraviolette, ledit composé étant contenu dans, ou sur la surface, dudit macrogel.

28. Macrogel de la revendication 1 ou de la revendication 23 sous la forme d'un cylindre, d'un cône, d'une sphère, d'un cube, ou d'un solide rectiligne.

29. Macrogel de la revendication 1 ou de la revendication 23 à l'intérieur d'un entonnoir, d'un tube, d'une pointe, ou équivalent.

30. Procédé pour produire une matrice macrogel continue consommable par des insectes, comprenant :
a) préparer une solution aqueuse de polysaccharide gélifiable ;
b) mélanger des morceaux d'un polymère hydraté hydrophile avec une dispersion aqueuse de nématodes ;
c) disperser le mélange aqueux de morceaux de polymère hydrophile et de nématodes dans toute ladite solution aqueuse de polysaccharide gélifiable ; et
d) gélifier le produit de l'étape c).

31. Procédé de production d'une matrice macrogel continue consommable par les insectes, comprenant :
a) préparer une solution de 0,4 % à 5,0 % d'un polysaccharide gélifiable par cations dans une eau désionisée ;
b) préparer une dispersion aqueuse de nématodes ayant de peu jusqu'à environ 500 000 nematodes par millilitre ;
c) ajouter des morceaux d'un polymère hydraté hydrophile dans la dispersion de nématodes ;
d) mélanger la solution de polysaccharide avec la dispersion de morceaux de polymère et de nématodes selon une proportion allant d'environ 4:1 à environ 1:4 de solution de polysaccharide par rapport à la dispersion de polymère et de nématodes pour former une dispersion de polysaccharide, de polymère et de nématodes ; et
e) gélifier avec des cations la dispersion de polysaccharide, de morceaux de polymère, et de nématodes.

32. Procédé de production d'une matrice macrogel continue consommable par les insectes comprenant :
a) préparer une solution de 0,4 % à 5,0 % d'un polysaccharide gélifiable dans de l'eau désionisée ;
b) préparer une dispersion aqueuse de nématodes ayant de peu à environ 500 000 nématodes par millilitre ;
c) ajouter des morceaux d'un polymère hydrophile gonflé d'eau dans la dispersion de nématodes ;
d) ajouter des cations gélifiants à la dispersion de polymère hydrophile et de nématodes ; et
e) disperser les produits des étapes a) et d) l'un avec l'autre selon une proportion d'environ 1:4 à 4:1.

33. Procédé pour contrôler les infestations d'insectes comprenant le fait d'appliquer à l'endroit où le contrôle est désiré une composition insecticide, ladite composition qui consiste essentiellement en une quantité efficace d'au moins une sorte d'entomopathogène et de morceaux de polymère hydrophile gonflé d'eau étant dispersée dans toute une matrice polymère continue consommable par les insectes.

34. Procédé de la revendication 33 comprenant en outre le fait de placer des conteneurs étanches de la composition de macrogel dans le lieu dans lequel le contrôle est désiré et le fait d'ouvrir lesdits conteneurs lorsque le contrôle est désiré, de façon optionnelle avec la fourniture sur site d'éléments attractifs, la fourniture de stimulants, ou les deux, pour attirer les insectes sur le macrogel insecticide.

35. Procédé de la revendication 33 comprenant en outre l'utilisation d'un insecticide complémentaire en liaison avec le macrogel insecticide.

36. Composition de la revendication 1 ou de la revendication 23 ayant depuis environ 25 % jusqu'à environ 75 % en poids de composé hydraté hydrophile et depuis peu jusqu'à environ 20 % en poids d'entomopathogènes, le reste étant un matériau de matrice et des additifs.

37. Macrogel de la revendication 26 sous la forme d'un cylindre, d'un cône, d'une sphère, d'un cube, ou d'un solide rectiligne.

38. Macrogel de la revendication 26 à l'intérieur d'un entonnoir, d'un tube, d'une pointe, ou équivalent.

39. Macrogel de la revendication 1 dans lequel ledit polymère hydrophile est sélectionné à partir du groupe consistant dans un polymère acrylique hydrophile, un polymère acrylamide et un polymère polyuréthane.

40. Macrogel de la revendication 1 ou de la revendication 23 dans lequel lesdites espèces d' entomopathogène sont des nématodes et des *Bacillus thuringiensis*.
